Europäisches Patentamt

European Patent Office

Office européen des brevets

(19)

(11) Publication number: **0 639 887 A1**

(12)

# EUROPEAN PATENT APPLICATION
## published in accordance with Art. 158(3) EPC

(21) Application number: 91917118.1

(22) Date of filing: **09.09.91**

(86) International application number:
**PCT/SU91/00180**

(87) International publication number:
**WO 93/05579 (18.03.93 93/08)**

(51) Int. Cl.6: **H02M 3/315**, H02M 3/335, H02M 7/48, H02M 3/28

(43) Date of publication of application:
**22.02.95 Bulletin 95/08**

(84) Designated Contracting States:
**AT BE CH DE DK ES FR GB GR IT LI NL SE**

(71) Applicant: **MOTOVILOV, Dmitry Nikolaevich**
**Box No. 937**
**Penza, 440046 (SU)**

(72) Inventor: **MOTOVILOV, Dmitry Nikolaevich**
**Box No. 937**
**Penza, 440046 (SU)**

(74) Representative: **Barendregt, Frank, Drs.**
**van Exter Polak & Charlouis B.V.,**
**P.O. Box 3241**
**NL-2280 GE Rijswijk (NL)**

(54) **SECONDARY ELECTRIC POWER SOURCE BASED ON MOTOVILOV'S TRANSFORMERS.**

(57) A known power source (S) comprises input ($G_{1, T}$) and output ($G_{2, T}$) converting components with $L_T$ and $M_T$ converting cells (CC), T > 0 galvanodecoupling bifilar converter transformers (GTR) (2, 9, 12, 16, 20, 22, 24, 26, 29). $L_o$ > 2, $M_o$ > 2 CC are based on "Motovilov's transformers" and on direct current power transformers (TM), each comprising two symmetrical groups of windings and rectifiers, in particular, for pulse control of the direct current of the windings of TM. To decrease the influence of the pulse and alternating current in the windings of TM and GTR on leakage inductance $L_s$ of the windings, and to consequently improve the frequency qualities of S, the decoupling and converting functions in S are distributed between GTR with a gain factor of 1, having correspondingly reduced $L_s$, and the $TM_s$ introduced for that purpose into the converting components ($G_{11}$ and $G_{21}$) intended to function on direct current (2, 9, 22, 24, 29) whereas $L_o$ and $M_o$ of CC with TM functioning on the basis of direct current are interconnected according to a multicell circuit which is characterized by the number of voltage levels at the output of the circuit equal to $Y = 1 + 2^{L(M)}$ at the total power of all CCs equal to $P < 2P_1$, where $P_1$ is the power of the first CC, and which is intended for smooth control of the output voltage of S without the pulse current at the output of S and in TM. Additionally is also proposed connection $L_1$ > 2 and $M_1$ > 2 of CC according to said multicell circuit (12, 16).

FIG.2

Rank Xerox (UK) Business Services
(3.10/3.09/3.3.4)

EP 0 639 887 A1

Field of the Invention

The present invention relates to the field of electrical engineering, and more specifically to power semiconductor and electron converters with improved frequency characteristics in the power ranges from 5 kVA to 100 MVA and higher, conversion frequency ranges from 50 Hz to 20 kHz and higher, with an a.c. and d.c. output, at a voltage of up to 110 kVA and higher. The field of application of the converters is secondary power supply sources (herebelow referred to as S), such as devices for radioelectronics, welding, electroplating, laser and other electrical technologies, converters for electrical drives and electric power systems. The improved frequency characteristics of S manifest both as higher frequencies of electric energy conversion and a lower level of parasitic frequencies at the source input and output.

State of the Art

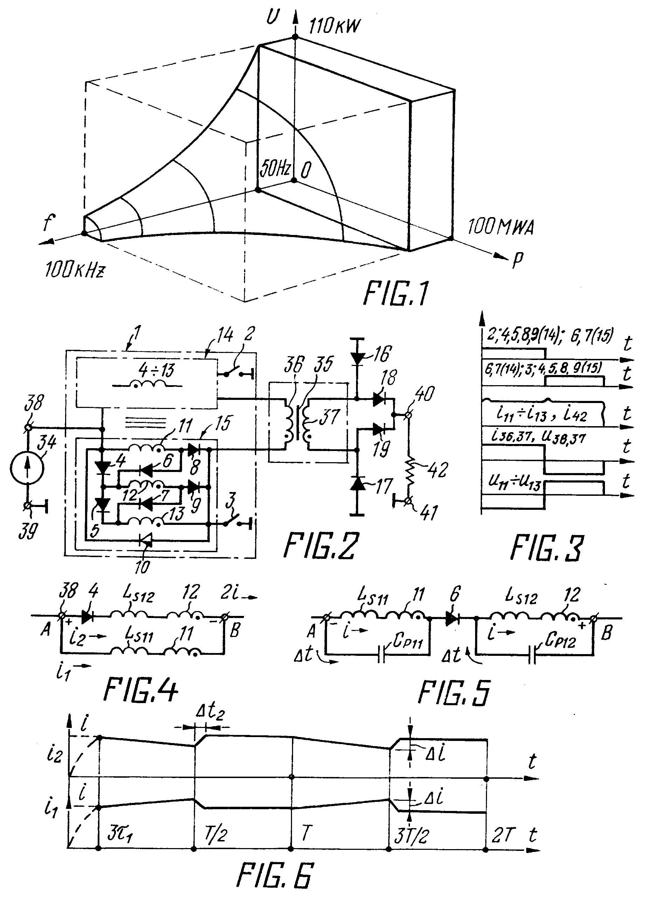

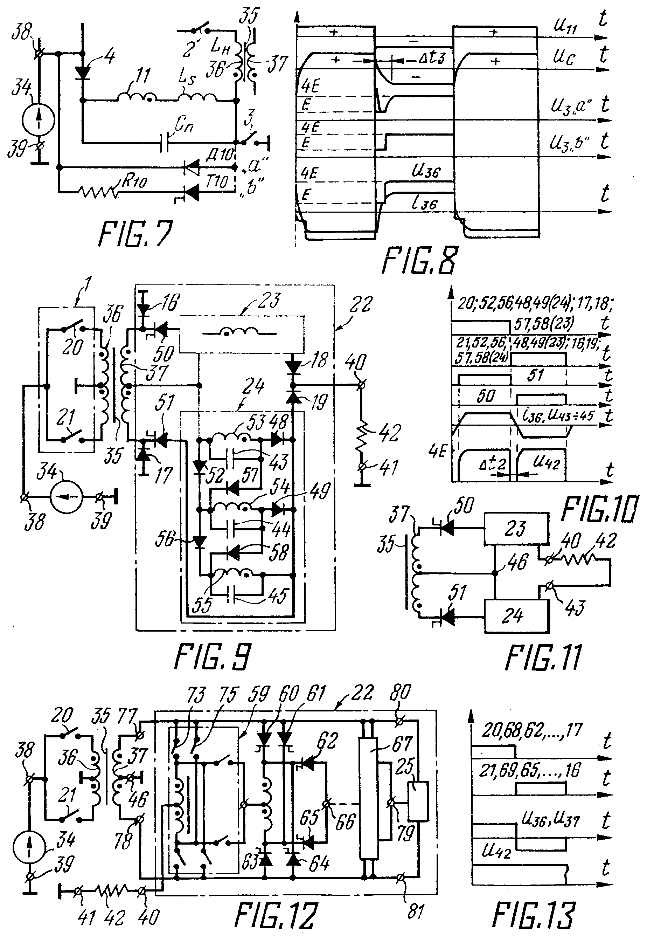

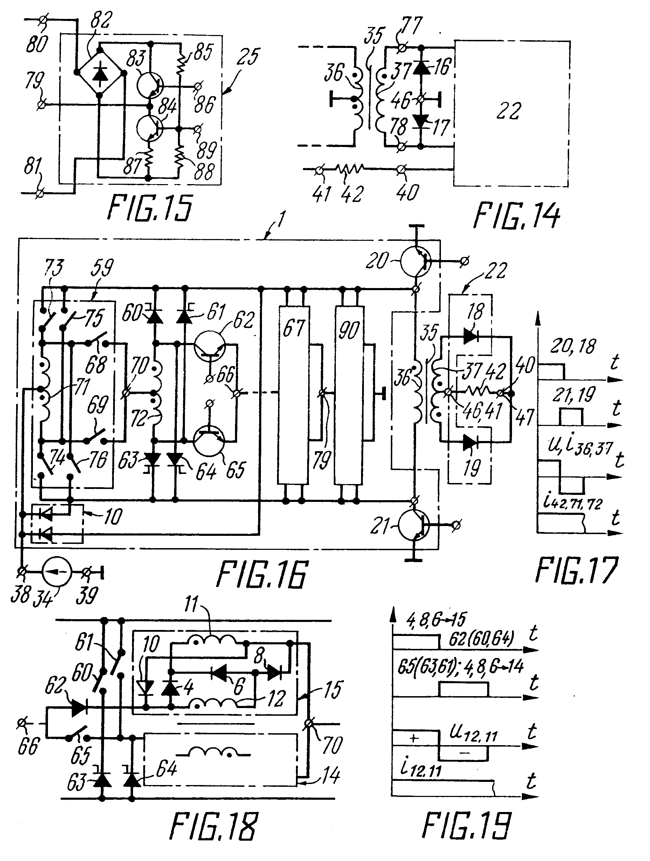

Prior-art supply sources (1 to 12) comprise at least one multipurpose conversion component (CC) (an input conversion component $G_{1,T}$ and an output conversion component $G_{2,T}$) based on rectifier cells Rec, controlled rectifier cells $Rec_c$ included, and can comprise $T \leq 1$ galvanoisolation transformers (GIT) with $C \geq 2$ sections of primary and secondary windings. The CC performs F functions, namely, the functions of rectifications, inversion, voltage stepping-up and stepping-down and others. In order to improve the frequency characteristics of the source by reducing the leakage inductances of the GIT windings, the sections thereof are made bifilar, i.e. by a double wire (8, 9). Voltage stepping-up and stepping-down in such GIT are effected due to parallel connection of the sections of one winding and series connection of the other winding sections (8). Conversion components $G_{1, 0}$ and $G_{2,0}$ comprise respectively $L_0 \geq 2$ of the i-th and $M_0 \geq 2$ of the j-th (i = 1 to $L_0$, j = 1 to $M_0$) conversion cells (CCel) series connected between the input and output of the CC. In this case $G_{1,0} + G_{2,0} = 1$, and the frequency characteristics are improved owing to a multi-cell circuit (MC) of connection of the CCel (1) and also due to the internal circuit of the CCel formed as 'Motovilov's transformer' (MT, a constant-current power transformer, CCPT) (1 to 6) based on parallel connection of two groups of components. These groups each includes $H_{i,j} \geq 1$ windings of the converter transformer, which have opposite orientation in different groups and similar orientation within one group. Each group includes $Rec_{i,j} \geq (3H_{i,j} - 1)$ rectifier cells, among which $Rec_{i,j,c} \geq 0$ rectifier cells are controlled. The windings within the group are connected through said rectifier cells in series aiding (unlike terminals connected together) and in parallel aiding (like terminals are connected together) with each other and with the input and output terminals of the CCel. Application of MT in the prior-art S is determined by the following specific features of the circuits employed in MT. Firstly, limitations in conversion frequency and transformer power rise, introduced in conventional transformers by the leakage inductances $L_S$ of the windings, are removed in MT. Direct current flows around the MT windings which present no resistance thereto. Secondly, MTs have improved mass-size indices (MSI), up to 2kVA/kg, which is ten times better than those of the classic converter. Improvement of the frequency characteristics in the MC component is achieved also by excluding parasitic harmonics at the supply source output. In the latter case, the method of pulse modulation is replaced by the method of selecting the required voltage value from the set of discrete levels of smooth voltage. All the conventional sources include a control unit having its outputs connected to the control outputs of switching circuits and rectifier cells. The prior-art sources are disadvantageous in low frequency characteristics. Thus, the frequency characteristics of the GIT of the supply source are restricted by that, because of a high maximum voltage level between the turns of the bifilar sections of the primary and secondary windings equal to $V_1 \cdot C$ (C/2 equals the transformation ratio of the GIT), use is made of reinforced insulation. $L_S$ is increased and the frequency characteristics of the GIT are worsened in proportion to the insulation thickness. The frequency characteristics of the MC component and S as a whole are restricted correspondingly by that, owing to a small amount of output voltage levels, $V_2$, of MC, one has to use the pulse-with control of the output voltage average value. This causes the appearance of subharmonics at the supply source output and the appearance of a pulse current in the MT windings, which disturbs the direct current conditions in the windings and limits drastically the power conversion frequency in the supply source. An increase in the number of voltages levels at the MC output of the known power source results in a drastic increase in the weight of all the CCels and is economically disadvantageous. As a whole, for the above stated reasons, the field of application of the conventional sources is restricted in frequency, voltage and power by the three-dimensional surface in a very small size (Fig. 1). Thus, any increase in power or voltage or current causes an increase of the wire diameter, insulation thickness and of the size of the cooling channels of the winding and magnetic core. The corresponding increase of $L_S$ of the GIT and MT results in a rise of the reactance and a drop in the source output voltage and even its failure.

Disclosure of the Invention

Instead of the conventional supply source, there is claimed a S which comprises, in addition to GIT, $L_1$ of the i-th and $M_1$ of the j-th CCels which employ the circuit of internal connections similar to the known CCels $L_o$ and $M_o$, and are connected in series between the input and output of the corresponding CC. The CCels $L_o$ and $M_o$ are also connected in a special circuit of the MC type between the input and output of the corresponding CC. The present invention resides in that the voltage stepping up and stepping-down, on one hand, and the function of galvanic isolation, on the other hand, are for the first time divided, respectively, between the MT forming part of the CCel and the GIT. The sections of the GIT windings are respectively connected in parallel on both sides of the transformer, and the maximum voltage level between the bifilar windings of the GIT does not exceed the constant shift voltage of a three-phase rectifier (around 310 V). THis reduces the requirements imposed on the strength and thickness of the winding insulation. For a source with an output voltage of $V_2$ = 30 kV and a power of P = 10 kVA, the insulation thickness is reduced by a factor of 30/0.31 and $L_S$ of the GIT is reduced by a factor of 96. With an appropriate increase of the magnetic core window and the same $L_S$, the winding conductor cross-section and the current strength of the GIT can be increased $96.8^{3/2} \approx 952$ times. The power of S will be 9.5MW, which testifies to a break of the high-frequency conversion principle into the electrical power engineering. Along with improving the frequency characteristics of S, the present invention also improves its MSI from 0.05 to 0.5 kVA/kG up to 1 to 2 kVA/kG because it is built around MT with similar values of MSI. In particular S for which the requirement imposed on $L_S$ of the windings is not considerable, the the invention allows a corresponding deviation of $K_g$ from 1. Improvement of frequency characteristics with T = 0 is attained in the MC component due to practically unlimited increase in the number of the levels of $V_2$ with a limited total installed power of the CCel, which makes it economically advantageous to give up pulse modulation of the voltage at the supply source output. Thus, parameter "Lev" in $G_{2,T}$ equals ( $1 + 2^m$) owing to the original circuit of MC, and already with M = 7, parameter "Lev" exceeds 1000 and the control accuracy is above 0.01%. The total installed power of CCel is less than $2P_1$. Elimination of the pulse current in MT windings removes the corresponding limitation in energy conversion frequency in this type of transformers.

Brief Description of the Drawings

Note: in describing the circuits, use is made of the notion of two-terminal and three-terminal windings, inputs and outputs by which are meant the inputs and putputs having either three terminals (two end and one central, "neutral") or two end terminals.

Fig. 1 shows three-dimensional regions of using a conventional source (solid line) and the source of the present invention (dashed line);

Fig. 2 is a circuit diagram of the source with an input CC 1 comprising CCels 2 to 15 of the stepping-up type with a gain factor $K_g$ = 4 and the output CC formed as a rectifier 16 to 19. The circuit parameters are: T = 1, $L_1$ = 1, $M_1$ = 0, $H_{1,0}$ = 3, $G_{1,1} + G_{2,1}$ = 2.

Fig. 3 shows the curves of operation of the circuit of Fig. 2, that is, the curves of the conductive conditions of the switching devices and rectifier cells, currents and voltages in the components;

Figs 4 and 5 are the equivalent circuits of parallel and series connection of windings 11,12 of one of groups of components with operating MT, wherein 4 and 6 are uncontrolled rectifier cells forming part of the MT, $L_S$ and $C_S$ are leakage inductance and stray interturn inductance of the windings;

Fig. 6 shows curves of the currents in windings 11, 12 of the MT according to Figs 4, 5;

Fig. 7 is the equivalent circuit for the supply source of Fig. 2 for the analysis of S operation with an inductive load $L_1$ as a leakage inductance of the GIT. $C_S$ and $L_S$ are parasitic parameters of winding 11.

Fig. 8 is the operation diagram of the circuit of Fig. 7;

Fig. 9 is the source with an input CC formed as an inverter 21, 20 and an output CC 22 includes a CCel 23, 24 with $K_g$ = 4; the circuit parameters are: T = 1, $L_1$ = 0, $M_1$ = 1, $H_{o,1}$ = 3, $G_{1,1} + G_{2,1}$ = 2;

Fig. 10 is the operation diagram of the circuit of Fig. 9;

Fig. 11 is the diagram of connection of the source output of Fig. 9 to an a.c. load;

Figs. 12, 16 are respectively an output CC 22 and an input CC 1, each comprising several CCels ($M_1$ = 3, $L_1$ = = 4) connected in different circuits for voltage stepping-up and stepping-down, respectively. The circuit parameters are: T = 1, $G_{1,1} + G_{2,1}$ = 2, $H_{i,0-}$ = 1, $H_{0,j-}$ = 1;

Fig. 13 is the operation diagram of the circuit of Fig. 12;

Figs 14, 15, 18 are respectively the forms of component 25, connection of the input of CC 22 (Fig. 12) to the GIT and the form of CCel with $K_g$ larger than 0.5 and less than 1;

Fig. 17 is the operation diagram of the circuit of Fig. 16;

Figs 20, 22, 24 are respectively forms of the source, with the inputs end outputs of the CC $G_{2,1}$ (23, 24), (22), (22) connected thereto, using CCels with the values of $K_g$ corresponding to these circuits (H/H-1; 0.5; 1/H; where H = $H_{i,j}$). The parameters of these circuits are: T = 1, $G_{1,1}$ + $G_{2,1}$ = 2, $L_1$ = 0, $M_1$ = 1, C = 2;

Figs 21, 23, 25 are the operation diagrams of the circuits according to Figs 20, 22, 24, respectively;

Fig. 26 is a form of parallel connection of the sections of both windings of the GIT, where 31 to 38 are the points of connection of the terminals of the winding sections. Parameter C = 6;

Fig. 27 is a form of connecting an a.c. load directly to the GIT;

Fig. 29 is a form of connecting the S of the present invention to a primary source 34 of a.c. voltage via a GIT 35 with a primary two-terminal winding 36 and a secondary three-terminal winding 37;

Fig. 30 is a diagram of connecting the primary source 34 to the GIT 35 having a three-terminal primary winding 36. The parameter $G_{1,1}$ is equal to zero.

Description of the Preferred Embodiments

An embodiment of the source of Fig. 2 comprises an input CC 1 ($G_{1,1}$) having controlled rectifier cells 2, 3, uncontrolled rectifier cells 4 to 9, voltage limiters based on dinistors 10, windings of a MT, 11 to 13, in two groups of components of CCels 14, 15, an output CC $G_{2,1}$ employing diodes 16 to 19 and a GIT 35 with C = 2 sections 36, 37 of the primary and secondary windings, an input 38, 39 and an output 40, 41 (with first terminals 38, 40 and second terminals 39, 41) connected to a load 42. Both CCs and the GIT 35 are connected into a common circuit, have Rec = 20 rectifier cells, of which $Rec_c$ = = 4 are controlled rectifier cells (2, 3, 10, 10). The inputs of the CC are anodes of diodes 4 and 18, 19, the outputs of the CC are cathodes of D15 and D18, D19. The CC 1 ($G_{1,1}$) comprises $L_1$ = 1 CCels 14, 15 which employs the circuit of internal connections based on parallel connection of two symmetric groups of components 14, 15 including $H_{i,j}$ = 3 windings 11, 13 (i = 1, j = 0). Both groups are mutually symmetric (similar) with opposite orientation of like (with points) of the winding terminals in groups 14, 15 and similar orientation within each group 14(15) with respect to the terminals of the input (anodes D4) and the output (cathodes D8) of said CCel 14(15). Each group 14(15) includes $Rec_{i,j}$ = (3H - - 3) + 1 rectifier cells 4 to 10, of which $Rec_{i,j,c}$ = 1 are controlled rectifier cells (D10), the winding 11 to 13 are connected via rectifier cells 6, 7 in series aiding (with unlike terminals connected together), via rectifier cells 4, 5, 8, 9 in parallel aiding (with like terminals connected together) with one another and with the terminals of said input and output of the CCels 14, 15. The CC 1 performs the function of voltage stepping-up and inversion, end of the CC 16 to 19 functions as a voltage rectifier. $B_{i,j}$ = 1 first terminal 38 of the input and $J_{i,j}$ = 0 first terminal of the output of the CCels 14, 15 (note that $B_{i,j}$ + $J_{i,j}$ always equals unity) are connected with unlike terminals of the first winding 11 in groups 14, 15 and also with the first terminals 38 of the inputs of a particular CC and the source as a whole, and the second terminal 39 of the source with $L_1 \geq 1$ is connected with the terminals of the output (cathodes D8) through the controlled rectifier cells 2, 3. The parameters are: $L_o$ = o, $M_o$ = 0, $M_1$ = 0, $L_1$ = 1. In addition, the supply source includes a unit for shaping control signals to control the circuit operation, having its outputs connected to the control inputs of the appropriate controlled rectifier cells 2, 3. The controlled rectifier cells 10 (dinistors) are voltage limiters connected between the end terminals of the outputs (cathodes D8) and the first terminals 38 of the CCel inputs. Used as the rectifier cells of the circuit can also be thyristors and other controlled devices with rectifier properties. Various elements and circuits can be series or parallel connected to D10 to improve or impart some properties to the voltage limiter. Similar voltage limiters can be cut into other circuits or the supply source, according to (1 to 6). Various forms of series-parallel connection of the MT windings through rectifier cells can be used, such as disclosed in (10), and also forms of series connection of chokes and resistors with the windings and parallel connection of the capacitors therewith. The windings 11 to 13 do not obligatorily have the equal number of turns, and the GIT can be protected against overvoltage by connecting various types of voltage limiters to the windings thereof or to other points of the source. The source of Fig. 2 operates such that the switching devices 2, 3 make in turn at a high frequency according to the switching functions shown in Fig. 3. At each first half-cycle, with a conductive K2, windings 11 to 13 of group 14 are connected in parallel to a supply source 34 through K2, and a voltage E is induced therein. The emf E in the windings 11 to 13 of group 15 corresponding to this voltage renders diodes 4, 5, 8, 9 nonconductive and causes parallel connection of these windings through diodes 6, 7 with the source 34 and a winding 36 through switching device K2. The voltage of the windings 11 to 13 and of the primary source 34 is separated across the winding 36, 4E in all. At each second half-cycle, the connections of the windings in each group 14, 15 are changed from parallel to series and vice versa, and a voltage 4E of opposite polarity is applied to the winding 36, which results in passing an alternating current $i_{36}$ therethrough, equal to the current in each of the windings 11 to 13. The

4

corresponding alternating current $i_{37}$ through a winding 37 is rectifier by diodes 16 to 19 and delivered to a load 42 at a voltage of 4E. If the MT has a magnetizing winding (2), a magnetizing alternating current of a triangular waveform flows therethrough. The power windings 11 to 13 of both groups 14, 15 pass in this case only direct current $i_{11-13}$ defined by voltage E and resistance $R_1$ of the load 42:

$$i = i_{11-13} = 4E/R_1 \qquad (1)$$

Equal currents i of one direction in the windings 11 to 13 of both groups are ensured due to both periodic connection of the windings of each group into a series chain and the effect of $L_s$ of the windings when they are connected in parallel according to the circuit of Fig. 4. Under steady-state operation, at each first half-cycle, the windings 11 to 13 of group 14 are series connected (Fig. 5) and currents $i_1$ and $i_2$ are equal correspondingly. At the second half-cycles, the same windings are connected in parallel (Fig. 4) and the currents through them are equal after the connection is changed from series to parallel:

$$i_1 = i_2 = i \qquad (2)$$

Then, the currents vary because of different amount of diodes in the parallel circuits according to the equation:

$$V_{AB} = V_R - E + L_s \cdot di_1/dt$$
$$V_{AB} = o - E + L_s \cdot di_2/di \qquad (3)$$

wherein E is emf in the windings, $i_1 = i + \Delta i$, $i_2 = = i - \Delta i$. Solution of equation (3) gives for the end of the half-cycle T/2

$$\Delta i = T/2 \cdot V_d/2 \, L_s \qquad (4)$$

Thus, for the parameters $P_1 = 2$ kVA, frequency f = 20kHz, $L_s = 10^{-3}$H and $V_{d4} = 4$ V, the difference in the currents attains only $2\Delta i = 5 \times 10^{-2}$A.

With a rise in the source power, $L_s$ rises correspondingly and current unbalance in windings decreases. At a next half-cycle, the windings with different currents $i_1$ and $i_2$ are series connected according to the circuit of Fig. 5. The current difference $2\Delta i$ is closed through the winding stray capacitance and charges it in time $\Delta t_1 = V/\Delta i \cdot C_s$ to voltage V. So, at V = 1000 V, $C_s = 100$ pF in the above example $\Delta t_1 = 0.08$ T/2. Voltage V less voltage E gives the voltage drop across the stray capacitance of the winding of 500 V. Correspondingly, current equalization in the windings under the action of this voltage occurs in time $\Delta t_2 = \Delta i \cdot L_s/500 = 10^{-7}$s. In the end, after time T of the circuit operation, currents in the windings are again equal to i (Fig. 6). Steady-state conditions after S of power 2.5 kVA ($R_1 = 1600$Ohm, E = 500 V) is cut in, takes place in time

$$3\tau_1 = 3L_s/R_1 = 3 \times 10^{-3} \text{ H}/1600 \text{ Ohm} = 2 \text{ mcs} \qquad (5)$$

where $\tau_1$ is the circuit constant "$L_s - R_1$".

The source operation (Fig. 2) into an inductive load in the form of a leakage inductance of the GIT windings 35 is ensured through interstage capacitors connected in parallel to the windings 11 to 13 and the limiters 10 in both groups 14, 15. The stray capacitance $C_s$ (Fig. 7) of the windings can function as the capacitor. Figure 7 shows limiters of two types, a dinistor (a) and a thyristor (b) in which resistor 10 performs the function of damping a transient current. The equivalent circuit 7 of the input CC is obtained from the circuit of Fig. 2 and operates according to the curves shown in Fig. 8. When the switching device 3 is rendered nonconductive, current i of the winding 11 (12, 13) flows through the capacitor $C_s$ and recharges it in time $\Delta t_3$ to voltage "-E". Simultaneously, the limiter 10 is closed, which is provided for the version (a) by over-voltage at the instant the inductive load 35 is opened by the switching device 3, and for the version (b) by feeding a control signal from the source control unit. After that, the current of the load 35 flows through the circuit 2-36-10-34, and the voltage at the switching device vice equals E. Under the action of this voltage the load current drops to zero in time

$$\Delta t_4 = 3 \, L_1/R_1 \qquad (6)$$

Thus, with $L_1 = 10^{-5}$ H, $R_1 = 1600$ Ohm

$$\Delta t_4 = 0.2 \ 10^{-7} s \qquad (7)$$

which makes it possible to operate at a frequency with a half-cycle of up to 5mcs (that is, f = 250 kHz). The thermal power of resistors 10 forming part of the limiters at a frequency of 10 kHz, a power of 200 kVA of the source comprises

$$P_{10} = I_1^2 \ (L_1/2_1) \ (T/2) = 1 \ kVA \qquad (8)$$

a sum in both limiters in groups 14, 15 amounts to 1% of the source and load power. With $L_1$ = 1mcH this value equals 0.1 kVA.

When the load is cut in, both switches 2, 3 open and a voltage surge occurs at the switching device being opened due to current interruption in the inductive load. This makes the limiter 10 conductive. Direct currents through the windings 11 to 13 flow along the circuits 11-6-12-7-13-10-11 and fall to zero exponentially. Voltage does not arrive at GIT 35 and output 41 (Fig. 2) from the time the switching devices 2, 3 are opened. The resister 10 in the limiter 10 circuit decreases the time of the current fall in the windings. The windings 11, 12 can be constantly disconnented by means of rectifier cells 8 and 9, the source gain factor changes respectively to 2 and 3, which permits of voltage regulation at the load 42. Voltage can also be regulated by periodically disconnecting the source, as described above. Over-voltages between the winding of the GIT 35 are removed by appropriate protection circuits not shown in the drawings and incorporated into the circuit where such over-voltages are possible. The effect of reduction of the reactance of the GIT 35 is due to the absence of a voltage drop source in the design conditions of operation between the turns of the primary and secondary windings (36 and 37) of the GIT windings with $K_g$ = 1 makes it possible to reduce correspondingly the insulation thickness therebetween. $L_s$ of the windings 36, 37 decreases with a decrease in insulation thickness. It is to be noted that the increase of the number of high-frequency circuits of MT H times as against a conventional transformer does not result in a considerable rise of the source $L_{sn}$ because the conductor cross-section is reduced by a factor of H, and its diameter and $L_s$ are reduces by a factor of the square root of H. The total $L_s$ of H windings connected in parallel of the incorporated MT is reduced if H increase $H\sqrt{H}$ times. At the same time, with a series connection of the windings, the parameter $L_{sn}$ somewhat rises. If, according to (11, 12), $L_{s1}$ of one circuit from winding 11 through the diode 6 to the winding 13 (Fig.2) is equal to about 0.03 mcH at $P_1$ = 0.1 kVA, then at the power of one section of the MT winding 500 Vx20 A = 10 kVA, we have $L_{s1}$ = 3 mcH, and the parameters f = 5 kHz, $H_{i,j}$ = 10 determine the parasitic voltage drop across series connected circuits

$$V = H_{i,j} x w \times L_{s1} \times i = 10 \times 2\pi x \ 5000 x \ 0.000003 \ x \times 20 \approx 20 \ V \qquad (9)$$

or 0.4% of the source load voltage.

In the source of Fig. 9, the GIT 35 and inverter 20, 21 are rated for a lower voltage than those of Fig. 2 because they are connected before the stepping-up CC 22. The input 1 and output 16 to 19, 43 to 58 CC are characterized by parameters Rec = 20, $Rec_c$ = 4, $M_1$ = 1, $G_{1,1}$ + $G_{2,1}$ = 2, $H_{i,j}$ = 3, $Rec_{i,j}$ = 6, $B_{i,j}$ = 1 (terminal 46), i = 0, j = 1. The common point of half-windings 36 is connected to the second terminal 39 of the source input. The terminals of the two-terminal output of the CC 22 (from diode 48, 49) and the end terminals of the last windings 55 of the CCels 23, 24 are connected through a first pair of rectifier cells 18, 19 to a first terminal 40 of the source output and through a second pair of rectifier cells 50, 51 to the end terminals of a three-terminal winding 37 having its third terminal connected to a first terminal 46 of the input of the CC 22 and CCel 23, 24. The end terminals of the winding 37 are also connected through a third pair of rectifier cells 16, 17 to a second terminal 41 of the source. Common buses 39 and 41 of the source input and output may have no conductive coupling. Parallel connected to windings 53 to 55 are interstage capacitors 43 to 45 which can be provided with additional chains of diodes, chokes, resistors and other components. With the source operating, the switching devices 20, 21 are closed in turn (Fig. 10), thereby inducing alternating current in the winding 36. The switching devices 50, 51 are rendered conductive by signals from a control unit with a time lag of $\Delta t/2$. Parallel connection of the windings 53 to 55 in group 23-(24) is supplied by voltage E from a lower (upper) half-winding of the winding 37 along the circuit 46-(53, 48), (52, 54, 49), (56, 55)-51 (or 50). Series connection of the windings 53 to 55 in group 24(23) is maintained by a voltage induced in the windings by the current flowing in the windings 53 to 55 of group 23(24). In this case, a circuit 46-53-57-54-58-55-19(19) is formed which is supplied by the current from the

6

EP 0 639 887 A1

lower(upper) half-winding of the winding 37. Then in the time interval $\Delta t$, the current in the upper(lower) half-winding the current rised to a working value. Load 42 turns out to be under the effect of total voltage 4E of the windings 53 to 55 and one half-winding 37. In this case, capacitors 43 to 45 shape a time lag $\Delta t/2$ when the polarity of emf in the windings 53 to 55 varies. During time $\Delta t/2$ voltage E across the winding 37 has time to make thyristor 50(51) non-conductive that was conductive before, which guards against a short-circuit current in the winding 36 with the thyristors 50,51 simultaneously conductive. High-frequency breaks in the output voltage can be avoided by connecting various filters at the source output. A circuit form of Fig. 11 shows an example of direct (short) connection of the output of CC $G_{2,1}$ to the output 40, 41 of the source with the two-terminal output of CC $G_{2,1}$ (cathodes D48, Fig. 9) and an alternating current load. In operation, the windings of the group 23(24) are series connected in the circuit 46-23(24)-40-42-41-24(25)-51(50), and the windings of the group 24(23) are parallel (series) connected in the circuit 46-24(23)-51(50)-37. At each half-cycle the states of the components change for the opposite according to the plot of Fig.10, and an a.c. voltage of the amplitude 4E is separated at the load 42.

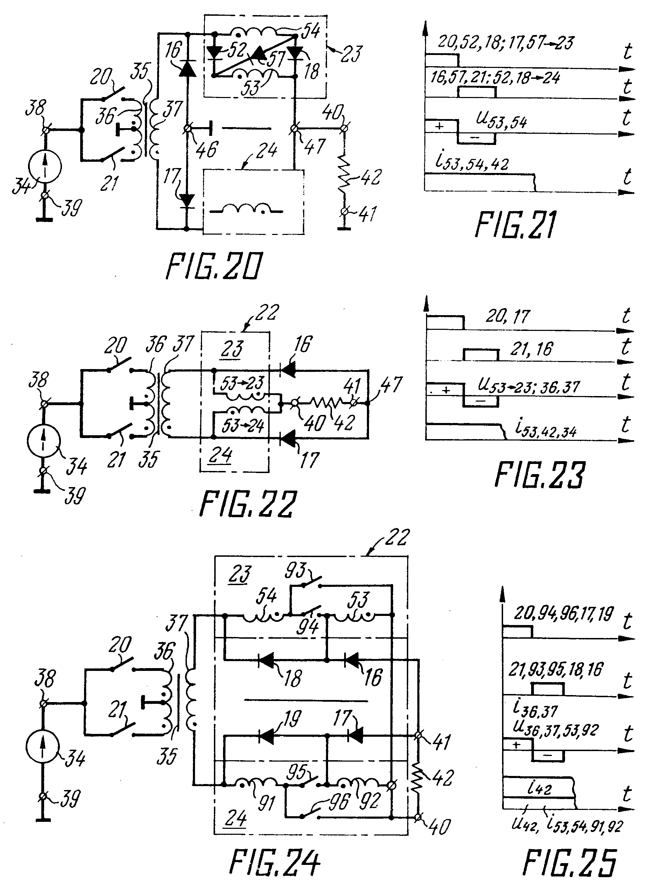

In the form of the source of Fig. 12, having a continuously adjustable voltage at the output 40, the output CC 20, 21 is similar to CC 1 (Fig. 9), the parameter $M_1$ = 2 (that is, a multi-cell circuit of CC is used), in the CC 22 each of the CCels 59, 60 to 66, 67 is connected, through a first pair of rectifier cells (68, 69), (62, 65), by means of a first terminal 70(66) (this terminal $J_{i,j}$ = 1,i = 0, j = 1 to 3 and equal to the number of the conversion cell) of the previous CCel 60 to 66, 67 formed by the connection point of the first windings (half-windings 72) of both groups of components (here they have only half-windings 71, 72), to both the ends terminals of the last (here they are also the first) of the $H_{0,j}$ windings of subsequent CCel 59 (60 to 66). Among these CCels, a certain number of $S_{2M}$(59, 60 to 66, 67) is connected, via second pairs (73, 74), (60, 63) of the rectifier cells, and a certain number of $S_{3M}$ (59, 60 to 66, 67) is connected, via third pairs (75, 76, 61, 64) of the rectifier cells, to the end terminals 77, 78 of the input of the CC 22. The number of the CCels $S_{2M}$ and $S_{3M}$ is within the limits from zero to $M_1$ depending on the selected range of the output voltage and the corresponding set of constantly open or constantly closed rectifier cells CCel. The end terminals of the last windings (of the type of 71 in CCel 59) of the first CCel 67 are connected, via the first pair of rectifier cells (of the type of 68, 69 in the CCel 59), to the introduced output 79 to connect the output of an additional voltage source 25. In this circuit, the source 25 has its input 80, 81 connected to an input 77, 78 of the CC 25 but may have other types of connection, including a two-terminal one (with a break in the circuit in point 80 or in point 81). The first terminals 40 of the outputs of the CC 22 and CCel 59 are connected with the first terminal 40 of the source output and the input 77, 78 of the CC 22 is connected to the secondary winding 37. The third terminal 46 of the latter is connected to the second terminal 41 of the output of S. Instead of points 46, 41 (or 39, 36), other points of the circuit can be grounded, or there can be no grounding. To the circuit of Fig. 12 belong possible particular embodiments of the source 25 (Fig. 15) and the circuit of the input connection through the diodes 16, 17 and the output connection of the CC 22 for the case of a two-terminal form of the winding 37 (Fig. 14). The circuit of Fig. 15 includes a rectifier bridge circuit 82 and a controlled transistor voltage divider 83 to 89 having its control input 86, 89 connected to the appropriate output of said control unit. The circuit of Fig. 14 includes a pair of diodes 16, 17 through which the terminals of the two-terminal winding 37 are connected to the second terminal of the output 40, 41 of the source. In the circuits of Figs 12 and 16, part of or all rectifier cells of the CCel can be fully controlled, symmetrical, in the form of diodes; part of them can be absent depending on the source purpose, its functions, alternating-or direct-load current, the range of voltage variation. All or part of the CCels can include multiwinding transformers ($H_{i,j}$>1) and have a circuit of internal connections ensuring, in combination, the gain factor equal to $H_{i,j}/(H_{i,j+1})$, according to the circuit of Fig. 18, and also other connection circuits of the windings, according to the references (1 to 6) providing for $K_g$ = $1/H_{i,j}$ and $K_g$ = $H_{i,j}$. Current-stabilizing chains employing chokes can be series connected with windings, and transfer chains based on capacitors are connected in parallel with the winding. When the source of Fig. 12 operates, the GIT 35 delivers a.c. voltage according to the plot of Fig. 13 to inputs 77, 78 of the output CC 22. Alternating current from the point 46 of the winding 37 (or from ground through diodes D17, D18 in case of the circuit of Fig. 14) passes through the winding 37 to the terminal 77 or 78, further through the CC 22, the first terminal 40 of the output, load 42 and through the second terminal 41 of the source output to a common bus. With a three-terminal winding 37 (Fig. 12), different-polarity potentials are fed to the terminals 77, 78, and with a two-terminal form of the winding 37 (Fig. 14), a zero potential is fed to one of the terminals 77(78) associated with the conductive diode (16(17). The CC 22 performs the function of continuous voltage adjustment respectively in the ranges (+E, -E) and (0, +E). Each of the thyristors of the CC 22 is either in a nonconductive state or operates as a diode, which is attained by feeding a constant unblanking or blanking signal from the control unit to the control input of the rectifier cell. The reference numerals of the rectifier cells that close and open in turn in the diode state mentioned above at the frequency of voltage

7

variation at the input 77, 78 are given in Table 1, depending on the required voltage level at the source output and load 42. If only one CCel 59 is present at the output 40 of winding 71, which divides the voltage into two, three voltage levels are possible: $V_{77}$, $V_{78}$ and their half-sum, i.e. +E, -E and zero. In this case the rectifier cells 68,69 are constantly open. If there are two CCels (59 and 60 to 66) in the CC 22, not only the voltage from the windings 37 can be fed to the end terminals of the winding 71 but also the voltage from the previous CCel via the switching devices 68,69. Five different voltage levels are formed at the output 40 of the last CCel, rather than three. In the end, the number of levels at the output of a particular MC forming part of the CC 22 is Lev = 1 + $2^M$, where M is the number of $M_1$ of CCels in the CC 22. With M = 7, the value of Lev exceeds 1000, which practically means continuous adjustment of the source output voltage.

In the range of the output voltage variation between these levels, the function of continuous adjustment is performed by the source 25 (Figs 12, 15), which is achieved by feeding the corresponding level of continuously

Table 1

| Sets of the Closed Rectifier Cells of the Source | | | |
|---|---|---|---|
| Output voltage of MC | | Closed rectifiers | |
| Circuit of Fig. 12 | Circuit of Fig. 16 | At first half-cycle | At second half-cycle |
| +E | +E | 73, 75, 20 | 74, 76, 21 |
| +E/2 | +4E | 73, 69, 60, 63, 20 | 74, 68, 60, 63, 21 |
| 0 | 0 | 73, 74 | 73, 74 |
| -E/2 | +4E | 74, 68, 60, 63, 20 | 73, 69, 60, 63, 21 |
| -E | +E | 74, 76, 20 | 73, 75, 21 |

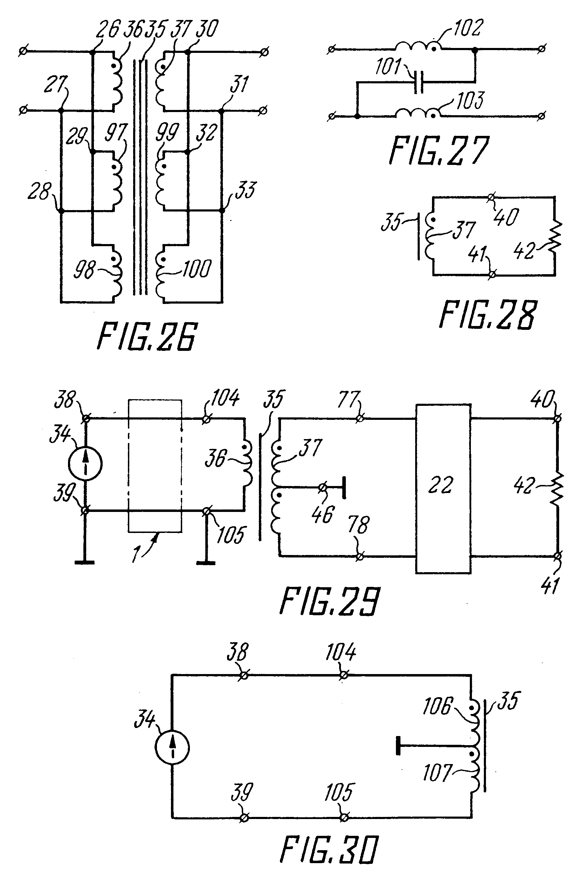

varying voltage to the output 86, 89 from the control unit and its repetition at the emitter of a follower 83 having a dynamic current load 84, 87. The bridge circuit 82 rectifies the a.c. voltage of the inputs 77, 78 (80, 81) and feeds it as the supply voltage to the follower 83. In the circuit of Fig. 16, a rectifier 18, 19 connected between the end terminals of the winding 37 and the first terminal 40 of the S output is used as the output CC 22 for stepping-up and discrete control of the output voltage with an increment "E". The parameter $L_1 \geq 2$, and each of the CCels 59, 60 to 66, 67, 90 in the CC 1 is connected through the first pair of rectifier cells (68, 69, 65) by the first terminal 70, 66, 79 of the input of a subsequent CCel 60 to 66, 67, 90 (first terminals of the input are designated here by the parameter $J_{i,j} = 1$, i = 1 to 4, j = 0) formed by the point of mconnection of the first of the $H_{i,j}$ windings (72) of both groups of components (consisting here of only these windings), to both the end terminals of the last of the $H_{i,j}$ windings (71) of the preceding CCel 59,60 to 66, 67. Said last windings in each of the $S_{2L}$ CCels are connected also through the second pairs of rectifier cells (73, 74, 60, 63) and in each of the $S_{3L}$ CCels, through the third pairs of rectifier cells (75, 76, 61, 64), to the end terminals of the output of the particular CC 1 (to the collectors of the transistors 20, 21). The number of $S_{2L}$ and $S_{3L}$ of said CCels can be within zero to $L_1$ depending on the selected range of the output voltage in which the S is to operate. Part of the rectifier cells pairs, which are constantly closed, can be replaced by short conductors; part of the rectifier cells pairs, which are constantly open, can be excluded from the circuit as well as from the circuit of Fig. 12. The end terminals of the last windings of the last CCel 90 (similar to the CCel 59 in the internal circuit) are connected through the first pair of rectifier cells 68, 69 to the introduced terminal for cutting in the output of an additional voltage source (here, to the "ground" bus). The first terminals of the input of the CC 1 and of the first CCel 59 are connected to the first terminal of the input 38 of S, and the output of the CC 1 is connected to the winding 36. Voltage limiters in the form of a dinistor assembly 10 are connected between the end terminals of the two-terminal output $G_{1,1}$ (CC 1 ), or collectors of T20, T21, and the first terminal 38 of the input of the CCel 59. The switching devices 20, 21 can be provided with diodes connected in parallel aiding to protect the emitter and with other conventional circuits of protection, switching and control. The bases of the transistors 20, 21 are connected to the outputs of said source control unit. The circuit of Fig. 16 can also include the above-described possible particular forms of the source 25 (Fig. 15) which can be used instead of the last CCel 90 and has its inputs 80, 81 connected to the collectors K20, K21, its output 79 connected to the input 79 of theCCel 67, and its control input (86, 89) connected to said control unit, to the output of the continuously adjustable voltage level. The output CC and its connection circuit from the secondary winding of the GIT 35 to the load 42 can be similar to the circuits of Fig. 2 (components 37, 16 to 19, 40 to 42), the circuits of Fig. 28 (components 37, 40 to 42), which show exemplary connections of the secondary winding 37 to the load 42. When the circuit of Fig. 16 operates, the switching devices K20, K21 close in turn according to the plot of Fig. 17, which causes the appearance of voltage in the winding 71 with a polarity corresponding to the set of the closed switching devices 73 to 76, 68,69. These and other rectifier cells of the circuit are rendered conducting by signals from the source control unit according to Table 1. The output voltage of the S is controlled within the limits from zero to 4E and through the GIT 35 and rectifier 22 arrives at the load 42. Rendering thyristors 73 to 76 non-conducting in the end of each half-cycle can be provided by the pause $\Delta t/2$ between the pulses controlling the switching devices 20, 21 (Fig. 10), during which the current of the windings 71(72) flows through the interstage capacitor (similar to the capacitor 43 of Fig. 9) parallel thereto, and the de-energized thyristors 73 to 76 are rendered non-conducting correspondingly. Overvoltage at the transistors 20, 21 is limited by the dinistor assembly 10 through which the winding current path closes and the current drops to zero. The rectifier cells 60 to 65 operate in a similar way. Other methods of control of the source circuit operation are also possible as well as the use of the order of rendering the rectifier cells conductive to provide for self-disconnection of the required thyristors, connecting a switching capacitor parallel to the winding 36 and so on and so forth. Thus, for example, if at first the switching devices 73, 69, 21 were closed, opening of the switching device 68 will cause de-energizing and rendering the thyristor 73 non-conducting, while opening of the switching device 74 will render the thyristor 69 non-conducting, thereafter K 21 is switched off and K 20 is switched on. In this case measures must be taken to prevent through currents, using circuit engineering disclosed in the corresponding lite-rature covering supply sources. The stepping-down CCel shown in Fig. 18 is similar to the stepping-up CCel of the type of 14, 15 (Fig. 2),that is, it is possible form of the CCel with the same windings and rectifier cells but with the opposite orientation of the latter. It comprises two similar symmetric groups of components (4, 6, 8, 10, 11, 12) and 14, has two windings 11, 12 in both groups ($H_{i,j}$ = 2), a first terminal 70 of the output of the CCel being connected with unlike outputs of the first windings 11 of both groups 14, 15, and connected to the end terminals of the latter consisting of $H_{i,j}$ windings 12 of these groups are a first pair of rectifier cells 62, 65. In the CCel of the circuit of Fig. 12, the rectifier cells are diodes. Said end terminals of the windings 12 of the CCel (the anodes of the rectifier cell 4) are connected through a second 60, 64 and a third 61, 63 pair of rectifier cells to the end terminals 77, 78 of the three-terminal input 77, 46, 78 of the CCel 22 of Fig.12. The limiters 10 in both groups of components are connected between the first terminal of the output 70 and said end terminals of the last windings of the CCel (the anodes of the rectifier cells 4 in groups 15, 14). When the particular CCel (Fig. 18) operates as part of the source of Fig. 12 where it can be cut in instead of the CCel 70 to 66 and have its output 70 and input 66 connected to the terminals 70 and 66 of the source, this CCel performs the function of a stepping-down element with $K_g$ = 2/3. At the first half-cycle, one of the switching devices (60, 62, 64) is conducting, through which a positive voltage level is fed to the winding 11 from the input 66 or from the upper (lower) bus of the CCel, respectively. Rendering the switching device 60(64) conducting results automatically in rendering the diode 62 non-conducting, a lower voltage level being present at the anode of the diode. Simultaneously, the rectifier cell 63 is rendered conducting (or rectifier cells 61, 62, with the rectifier cells 60, 64 conducting). There is formed parallel connection of the windings 11, 12 through the rectifier cells 4, 8 and in group 14, through the rectifier cell 6. The voltage between the anodes of the rectifier cells 4 in groups 1 to 12 and 14 is divided between the parallel and series connected windings of both groups in the ratio 2/3, 2/3 of the input voltage of the CCel 70 to 66 is separated at the output 70. At the second half-cycle, the states of the rectifier cells and switching devices in both groups (60 to 62, 4, 6, 8) and (63 to 65, 14) vary from conducting to non-conducting and vice versa. The windings 11, 12 of group 15 are series connected and the windings 11, 12 of group 14 are connected in parallel, and 2/3 of the source 34 voltage is separated at the output 70 as before. In the case of a break in the d.c. circuit of the windings 11, 12 at the input or output of the CCel, the appearing overvoltage renders the dinistors 10 conducting, through which the current path closes and the currents through the winding 11, 12 drop to zero. In case the CCel of Fig. 18 is used as part of the circuit of Fig. 16 it can, as the other CCels of the input CC 1 and output CC 22, perform the function of a stepping-up element with $K_g$ = 3, and in this capacity it is also a form of the CCel 14, 15 according to Fig. 2. In this case, the connection of the input and output to the external components of the source is mutually changed, the orientation of all the rectifier cells of Fig. 18 must be reverse (as in the rectifier cells 4 to 10 of Fig. 2), and the CCel as a whole is cut in instead of the CCel 70 to 66 of Fig. 16 by the like terminals. In operation according to the plot of Fig. 19, the rectifier cell 62 (60, 64) is rendered conducting and the windings 11, 12 of the upper group 4 to 12 are connected in parallel between this rectifier cell and the input 70. The windings 11, 12 of the group 14 are series connected between the input 70 and conducting rectifier cell 61 or 63, thereby feeding therethrough the trebled difference of potentials to the respective bus of the CCel and CC. The CCel of Fig. 18 can be connected into a circuit of Fig. 16 as a stepping-down element with $K_g$ = 2/3. It has its input 70 connected to the input 66 of the CCel 67, and its output 66 connected to the output of the CCel 59 instead of the CCel 70 to 66 of Fig. 16. When the switching device 62 closes, the windings 11, 12 of group 15 are connected in parallel between the terminals 66, 70, and the windings 11, 12 of group 14 are series connected between the common bus and the terminal 70 through the thyristor 64. The voltage between this bus and the terminal 70 amounts to 2/3 of the voltage between said bus (rectifier cells 64, 63) and the terminal 66. When the switching device 65 closes and the switching device 62 opens, at the second half-cycle the thyristor 63 is rendered non-conducting, 60 is rendered conducting, the windings 11, 12 are connected in series and the same windings in group 14 are connected in parallel to the terminals 70, 66. The switching devices 62, 65 in this case are fully controlled thyristors. The constant level of voltage at the terminal 70 is 2/3 of the potential difference of the terminal 66 and one of the common buses.

For the source of Fig. 20, the parameters $M_1 = 1$, $L_1 = 0$, $C = 2$, $H_{0,1} = 4$, $F = 1$, $J_{0,1} = 1$, $K_g = 1H_{0,1}/(H_{0,1} + 1) = 2/3$, inserted as the input CC are fully controlled rectifier cells (switching devices) 20, 21 for inverting the direct current of the source 34, the end terminals of the two-terminal input of the output CC 16, 17, 23, 24 (the anodes of rectifier cells 52) are directly connected to the unlike terminals of the last windings 54 in groups 23, 24 of the CCel and to the secondary winding 37 of the GIT 35, and, through chains, each containing Ch rectifier cells 16, 17 (Ch = 1), to the second terminal 41 (through terminal 46) of the source input, the first terminal 47 of the output of the CCel 23, 24 being connected to the first terminal 40 of the outputs of the output CC and the source as a whole and to the unlike terminals of the first windings 53 in both groups 23, 24. In operation of the circuit according to Fig. 16, the switching devices 21, 20 form an a.c. voltage across the winding 36, which is transmitted to the cathodes of diodes 16, 17. At the first half-cycle the voltage is applied to the diode 16, the windings 53, 54 in group 23 are connected in parallel between the anode of the non-conducting diode 16 and the terminal 40, and the same windings in group 24 are series connected between the conducting diode 17 and the terminal 40. At the second half-cycle the types of connection of the windings 53, 55 in groups 23, 24 change from series to parallel and vice versa. The constant voltage of 2/3 E is at the terminal 40. In the circuit of Fig. 22, the parameters $M_1 = 1$, $L_1 = 0$, $H_{0,1} = 1$, $K_g = 0.5$, Ch = 1. This source is similar to the source of Fig. 20 but has a less number H of windings 53 and the corresponding considerable simplification of the circuit of the output CC. The latter comprises only transformer with windings 53 and rectifier cells 16, 17. In operation of the circuit according to the plot of Fig. 23, Voltage E across the winding 37 is divided in two across the windings 53, and an a.c. voltage of E/2 is at the load 42. For the circuit of Fig. 24, the parameters $C = 2$, $G_1 + G_2 = 2$, $M_1 = 1$, $L_1 = 0$, $H_{0,1} = 2$, $K_g = 1/3$, $G_{0,1} = 1$. The input portion of the circuit, GIT 35 included, is designed and operates similarly to the circuits of Figs 15, 17. The end terminals of the output CC 22 (cathodes of rectifier cells 18, 19) are connected to the unlike terminals of the last windings 54, 91 of groups 23, 24 and to the winding 37, and through the rectifier cell chains 16, 18 and 17, 19, to the second terminal 41 of the source output. The first terminal 40 of the output of the CCel and the output CC 22 and of the source as a whole is connected to the unlike terminals of the first windings 53, 92 in both groups. The rectifier cell chains can contain each only one rectifier cell 16 to 19 per each of the windings (1 to 6). The rectifier cells in this circuit, except for diodes 16 to 19, are fully controlled and have their control inputs connected to the respective output of said control unit. The CCel of this particular type can include capacitors connected in parallel to the windings or between the windings of different groups (54 and 91) and other additional circuits and units based on thyristors, dinistors and other electric components used for improving the characteristics of the performance condition. Used instead of diodes and as controlled switching devices can be symmetric rectifier cells and circuits for providing regeneration conditions or for the source operation when an a.c. voltage is fed to its input. When the circuit operates, its input portion 20, 21 operates according to the plot of Fig. 25 in a way similar to that of the circuits discribed above, an a.c. voltage is at cathodes of the diodes 18, 19. When a higher voltage level is applied to the cathode 18, the switching devices and diodes 20, 94, 17, 96 are conducting, the others are non-conducting. The voltage of the winding 37 is divided into three among the windings 53, 54 connected in series, winding 91, 92 connected in parallel and the load 42. At a next half-cycle, the state of the rectifier cells is changed into opposite, the windings 53, 54 and the load are connected in parallel, the windings 91, 92 are series-connected, 1/3 of the voltage of the winding 37 is fed to the load 42. Fig. 26 shows an example of parallel connection of the sections of the primary and secondary windings 36, 97 98 and 37, 99, 100 respectively, of the transformer 35 through points 26 to 33. Series connected with the sections can be inductive and resistive components, such as current-equalizing choices, resistors for equally dividing the winding input current among the sections connected in parallel. $L_s$ is proportional to the conductor diameter, the cross section of which and the current through which are proportional to the square of the diameter, and therefore $L_s$ of each winding is less by a factor of $\sqrt{C/2}$, and $L_s$ of all C/2 sections is less by a factor of $C/2 \sqrt{C/2}$ than $L_s$ of a not sectionalized winding. Fig. 27 shows an example of connection of a converter capacitor 101 between adjacent windings 102 and 103 in groups of CCels, also known from (1 to 6). Thus, in the circuit of Fig. 9, the capacitor can be cut in instead of the diode 57 in groups 23, 24, which results in an increase of the gain factor of the CCel by one. When the CCel operates with such a capacitor, the latter is charged to level E with parallel connection of the windings and partly discharges into the load 42 with series connection of the windings and capacitor, thereby increasing voltage across the load by E. In the circuit of Fig. 28, the terminals of the winding 37 of the GIT 35 are directly connected to the output 40, 41 of the source ($G_2$ = 0). In operation, the load 42 is loaded with the high-frequency a.c. voltage of the winding 37. In the circuit of Fig. 29 connected to the A.c. voltage source, there is no input CC 1 ($G_1$ = 1), and the input 38, 39 and output 104, 105 of the absent CC 1 are shorted out. When the circuit operates, an alternating current form the source 34 arrives through the GIT 35 at the CC 22 where it is converted by one of the described methods according to the internal circuit of the CC 22. Fig. 30 is an example of the circuit of Fig. 29 for the case of a three-terminal form of the primary winding 36 of the GIT 35 with two half-windings 106, 107. When the circuit operates, the alternating current from the source 34 simultaneously passes in equal parts along both half-windings, thereby equal potentials opposite in sign across the end terminals of the winding 36. Then, the electric energy is transformed on the secondary side of the GIT 35, depending on the internal circuit of the CC $G_2$.

## Claims

1. A secondary power supply source (S) based on Motovilov's transformers, comprising $1 \geq T \geq 0$ galvanoisolation transformers (GIT) with bifilar windings having C = 2 sections connected inparallel on one side of the GIT and also $G_{1,T}$ input and $G_{2,T}$ output multi-functional conversion components (CC) having inputs and outputs and based on rectifier cells Rec, including controlled rectifier cells $Rec_c$ = 0, said CC being connected into a common circuit with the GIT between an input and output of said S, $G_{1,0} + G_{2,0}$ = 1, $2 \geq G_{1,1} + G_{2,1} \geq 1$, said input and output CC comprising, respectively, $L_T$ and $M_T$ of i-th and j-th conversion cells (CCel) with inputs and outputs, where T = 0, i = 1 to $L_T$, j = 1 to $M_T$, $L_1 + M_1 \geq 1$, $L_0 \geq 2$, $M_0 \geq 2$, said CCels $L_0$, $M_0$ being series connected between the input and output of CC and employing the circuit of internal connections based on parallel connection of two symmetric groups of compnents, each said group containing $H_{i,j} \geq 1$ windings of converter transformers, having, according to the connection circuit of components, mutually opposite orientation of the windings in different groups and similar orientation thereof within each group relative to the input and output of the CCel, each group including $Rec_{i,j} \geq (3H_{i,j} - 3)$ rectifier cells, of which $Rec_{i,j,c} \geq 0$ are controlled rectifier cells, the windings within the groups of components being connected through said rectifier cells in series aiding and in parallel aiding with each other and with the input and output terminals of the CCel, both CC $G_{1,T}$ and $G_{2,T}$ being designed to perform a combination of functions F, where $F \geq 1$, which include rectifying, inverting, stepping-up/stepping-down voltage (current), controlling its shape, amplitude and frequency of variation, said source further comprising a unit for shaping signals to control the mode of the S operation, having its outputs connected to control inputs of the corresponding controlled rectifier cells, characterized in that, with a view to improving the frequency characteristics, said S comprises $L_1$, $M_1$ ($L_1 + M_1 \geq 1$) CCels which employ the circuit of internal connections based on parallel connection of two groups of components, similarly to $L_0$ and $M_0$ CCels, and are connected in series between the inputs and outputs of the CC $G_{1,1}$ and $G_{2,1}$; $B_{i,j} + J_{j,i}$ = 1 of the first terminals of the input and output of the i,j-th CCel are connected with unlike terminals of the first windings in both groups of components of this particular CCel, where $B_{i,j}$ is the number of the first terminals of the input, $J_{i,j}$ is the number of the first terminals of the output of the i, j-th CCel; ($B_{i,j} + J_{i,j}$) first terminals of the output of a first CCel of the CC $G_{1,T}$ are connected with first terminals of the inputs of this particular CC and S as a whole, and a second terminal of the latter, with $L_1$ = 1, is connected with the terminals of the output of the input CC through said controlled rectifier cells; each of $L_0$ CCels of the CC $G_{1,1}$ is connected, according to a multi-stage circuit through a first pair of said rectifier cells by the first terminal $B_{i,j}$ = 1 of the input of a next CCel, said terminal being formed by the point of connection of the first windings of both groups of components, to both the end terminals of the last of the $H_{i,0}$ windings of the preceding CCel, which are in each of the $S_{2L} \leq L_0$ CCels are connected through second, and in each of the $S_{3L} \leq L^0$ CCels through third pairs of said rectifier cells to the end terminals of the output of this particular CC, and the end terminals of the last windings of the last CCel are connected through the first pair of rectifier cells to the introduced terminals for connecting thereof to an additional voltage source, the first terminal of the input of the CC $G_{1,0}$ and of the first CCel being connected to the first terminal of the input of the S through $Rec_{G1} \geq 0$ controlled rectifier cells: each of the $M_0$ CCels of the CC $G_{2,0}$ is connected according to a multi-stage circuit throuth the first pair of said rectifier cells by the terminal $J_{i,j}$ = 1 of the output of the preceding CCel, formed by the point of

EP 0 639 887 A1

connection of the first windings of both groups of components, to both the end terminals of the last of the $H_0$ windings of a next CCel, which are, in each of the $S_{2M} \leq M_0$ CCels, connected through the second and in each of the $S_{3M} \leq M_0$ CCels, through the third pairs of said rectifier cells to the end terminals of the input of this CC, and the end terminals of the last windings of the first CCel are connected through the first pair of rectifier cells to the introduced terminals for connecting an additional voltage source, the first terminals of the outputs of CC $G_{2,0}$ and of the last CCel being connected to the first terminal of the output of S, and the input of the CC $G_{2,0}$ being connected to the input of S through $Rec_{G2} \geq 0$ controlled rectifier cells.

2. An S as claimed in Claim 1, characterized in that with $L_1 \geq 2$, each of the CCels of the input CC $G_{1,1}$ is connected according to a multi-stage circuit through the first pair of said rectifier cells by the first terminal $B_{i,j} = 1$ of the input of a next CCel, formed by the point of connection of the first windings of both groups of components, to both the end terminals of the last of the $H_{i,0}$ windings of the preceding CCel, which in each of the $S_{2L} \leq L_1$ CCels are connected also through the second and in each of the $S_{3L} \leq L_1$ of the CCels through the third pairs of said rectifier cells to the end terminals of the output of this CC, and the end terminals of the last windings of the last CCel are connected through the first pair of rectifier cells to the introduced terminal for connecting thereto the output of the additional voltage source, the first terminals of the input of the CC $G_{1,1}$ and of the first CCel are connected to the first terminal of the input of S, and the output of the CC is connected to the primary winding of a GIT.

3. An S as claimed in Claim 1, characterized in that with $M_1 \geq 2$, each of the CCels of CC $G_{2,1}$ is connected according to a multi-stage circuit through the first pair of said rectifier cells by the first terminal $B_{i,j} = 1$ of the output of the preceding CCel, formed by the point of connection of the first windings of both groups of components, to both end terminals of the last of the $H_{0,j}$ windings of a next CCel, which are, in each of the $S_{2M} \leq M_1$ CCels, are connected through the second and, in each of the $S_{3M} \leq M_1$ CCels, are connected through the third pairs of said rectifier cells to the end terminals of the input of this CC; the end terminals of the last windings of the first CCel are connected through the first pair of rectifier cells to the introduced terminal for connecting thereto the output of the additional voltage source, said first terminals of the outputs of the CC $G_{2,1}$ and of the last CCel are connected to the first terminal of the output of S, and the input of the CC $G_{2,1}$ is connected to the secondary winding of the GIT.

4. An S as claimed in Claim 1, or Claim 2, or Claim 3, characterized in that connected between the end terminals of the outputs and the first terminals of the inputs of said CCels are voltage limiters built around controlled components having their control inputs connected to the corresponding outputs of said control unit.

5. An S as claimed in Claim 1, or Claim 2, or Claim 3, characterized in that interstage capacitors are connected in parallel to the windings in said groups of components of CCel.

6. An S as claimed in Claim 1 or an S as claimed in Claim 2 or in Claim 3, characterized in that with $H_{i,j} \geq 2$, the introduced converter capacitors are connected between the unlike terminals of adjacent windings of said groups of components of CCel.

7. An S as claimed in Claim 1 or Claim 2, characterized in that with $M_1 = 0$, a rectifier is used as said CC $G_{2,1}$, the inputs of said CC and of said rectifier being directly connected to the secondary winding of the GIT, and the outputs being connected to the output of the source.

8. An S as claimed in Claim 1 or Claim 3, characterized in that with $M_1 = 0$, the outputs of the secondary winding of the GIT are shorted out by the output of S.

9. An S as claimed in Claim 1 or Claim 3, characterized in that with $L_1 = 0$, said redtifier cells are placed inside the input CC $G_{1,1}$ for inverting the input current, said rectifier cells being connected between the first terminal of the CC input and the end terminals of the primary winding of the GIT.

10. An S as claimed in Claim 1 or Claim 2, characterized in that with $L_1 = 0$, the input and output of the input CC $G_{1,1}$ are shorted out.

12

11. An S as claimed in Claim 1, characterized in that the first terminals of the input of the CC $G_{1,0}$ and of the first CCel of this CC are connected with the first terminal of the input of S through said controlled rectifier cells.

12. An S as claimed in Claim 1, characterized in that the first terminals of the input of the CC $G_{1,0}$ and the first CCel of thisparticular CC are shorted out by the first terminal of the S input.

13. An S as claimed in Claim 1, characterized in that the input of the CC $G_{2,0}$ is connected with the S input through said controlled rectifier cells.

14. An S as claimed in Claim 1, characterized in that the input of the CC $G_{2,0}$ is shorted out by the S input.

15. An S as claimed in Claim 1, or Claim 2, or Claim 3, characterized in that with a two-terminal form of the secondary winding of the GIT, its terminals are connected with the second terminal of the S output through the fourth pair of said rectifier cells.

16. An S as claimed in Claim 1, or Claim 2, or Claim 3, characterized in that with a three-terminal form of the secondary winding of the GIT, the common point of its half-windings is shorted out by the second terminal of the S output.

17. An S as claimed in Claim 1, or Claim 2, or Claim 3, characterized in that the sections of the windings of GIT are connected in parallel on the second side of the GIT.

18. An S as claimed in Claim 1 or Claim 3, characterized in that with $L_1 = 1$, the output of the CCel of CC $G_{1,1}$ is connected directly to the output of the CC and to end terminals of the primary winding of the GIT and the first terminals of the inputs of the CCel, CC and the S as a whole are connected with the point of connection of the unlike terminals of the first winding of both groups of components of the CCel.

19. An S as claimed in Claim 1 or Claim 2, characterized in that with $M_1 = 1$, both terminals of the two-terminal output of CC $G_{2,1}$ are connected through the first pair of said rectifier cells with the first terminal of the S output and through the second pair of said controlled rectifier cells with the end terminals of the GIT secondary winding, having its third terminal connected to the first terminal of the input of the CC $G_{2,1}$ and having its end terminals connected through the third pair of said rectifier cells with the second terminal of the S output.

20. An S as claimed in Claim 1 or claim 2, characterized in that with $M_1 = 1$, both terminals of the two-terminal output of the CC $G_{2,1}$ are directly connected to both terminals of the S output and through the second pair of said controlled rectifier cells with the end terminals of the GIT secondary winding having the common point of its half-windings shorted out by the first terminal of the input of CC $G_{2,1}$.

21. An S as claimed in Claim 1 or Claim 2, characterized in that with $M_1 = 1$, $H_{0,1} = 1$, the end terminals of the input of CC $G_{2,1}$ are connected directly to the first unlike terminals of the windings of both groups of components of CCel and to the outputs of the GIT secondary winding and through the third pair of rectifier cells with the second terminal of the S output, the first terminal of the output of CCel being connected to the first. terminals of the outputs of this CC and of S as a whole and to the second terminals of the windings in both groups of components of CCel.

22. An S as claimed in Claim 1 or Claim 2, characterized in that with $M_1 = 1$, $H_{0,1} > 1$, the end terminals of the input of CC $G_{2,1}$ are connected directly to the unlike terminals of the last windings of the groups of components of CCel of the particular CC and to the secondary winding of GIT and through the introduced rectifier cell chains each containing $Ch \geq 1$ series connected rectifier cells to the second terminal of the S output, the first terminal of the output of CCel being connected directly to the first terminal of the outputs of the particular CC and S as a whole and to the unlike terminals of the first windings in both groups of components of CCel.

FIG.1

FIG.2

FIG.3

FIG.4

FIG.5

FIG. 6

FIG.7

FIG.8

FIG.9

FIG.10

FIG.11

FIG.12

FIG.13

FIG.15

FIG.14

FIG.16

FIG.17

FIG.18

FIG.19

FIG.20

FIG.21

FIG.22

FIG.23

FIG.24

FIG.25

FIG.26

FIG.27

FIG.28

FIG.29

FIG.30

## INTERNATIONAL SEARCH REPORT

| International application No. |
| --- |
| PCT/SU 91/00180 |

| A. CLASSIFICATION OF SUBJECT MATTER |
| --- |
| Int.Cl.$^5$ H 03 M 3/315, 3/335, 7/48 |
| According to International Patent Classification (IPC) or to both national classification and IPC |

| B. FIELDS SEARCHED |
| --- |
| Minimum documentation searched (classification system followed by classification symbols) |
| Int.Cl.$^5$ H 03 M 3/22, 3/24-3/28, 3/305, 3/315, 3/325, 3/335 |
| Documentation searched other than minimum documentation to the extent that such documents are included in the fields searched |
| Electronic data base consulted during the international search (name of data base and, where practicable, search terms used) |

| C. DOCUMENTS CONSIDERED TO BE RELEVANT | | |
| --- | --- | --- |
| Category* | Citation of document, with indication, where appropriate, of the relevant passages | Relevant to claim No. |
| A | SU, A1, 311363 (LENINGRADSKY INSTITUT AVIATSIONNOGO PRILEOROSTROENIA), figure 1 | 1 |
| A | US, A, 3588664 (MITSUBISHI DENKI KABUSHIKI KAISHA), 28 June 1971 (28.06.71), the abstract | 1 |
| A | SU, A1, 1078561 (V.A. POLYALCOV ET AL), 7 March 1984 (07.03.84), the abstract | 1 |

☐ Further documents are listed in the continuation of Box C.    ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 3 April 1992 (03.04.92) | 29 May 1992 (29.05.92) |

| Name and mailing address of the ISA/ | Authorized officer |
| --- | --- |
| ISA/SU | |
| Facsimile No. | Telephone No. |

Form PCT/ISA/210 (second sheet) (July 1992)